# EUROPÄISCHE PATENTSCHRIFT

(11) **EP 4 263 394 B1**
(45) Veröffentlichungstag und Bekanntmachung des Hinweises auf die Patenterteilung: **02.04.2025**
(21) Anmeldenummer: 21839069.8
(22) Anmeldetag: 10.12.2021
(51) Int. Cl.: B65G 39/12, F16B 29/00, F16B 35/04

(54) **ROLLENFÖRDERER**
ROLLER CONVEYOR
CONVOYEUR À ROULEAUX

(30) Priorität: 15.12.2020 DE 102020133619
(43) Veröffentlichungstag der Anmeldung: 25.10.2023
(73) Patentinhaber: Interroll Holding AG, 6592 Sant' Antonino (CH)
(72) Erfinder: MANS, Erwin, 41836 Hückelhoven (DE); LUBOMIERSKI, Kai, 41836 Hückelhoven (DE); KRONHOLZ, Stephan, 41836 Hückelhoven (DE); ZINN, Jürgen, 41836 Hückelhoven (DE)
(74) Vertreter: Kohlhof, Stephan
(86) Internationale Anmeldenummer: PCT/EP2021/085262
(87) Internationale Veröffentlichungsnummer: WO 2022/128806

(56) Entgegenhaltungen:
- WO-A1-2015/051391
- DE-A1- 19 532 390
- DE-A1- 2 736 131
- DE-B4- 10 336 304
- GB-A- 2 101 061

## Beschreibung

Die Erfindung betrifft einen Rollenförderer sowie ein Verfahren zum Herstellen eines Rollenförderers.

Eine Rollenförderer umfasst eine Vielzahl an Rollen, die auf einem Traggestell gehalten sind. Auf den Rollen kann ein Fördergut transportiert werden. Die Rollen können einerseits Motorrollen sein, die selbst über einen Antriebsmotor verfügen. Solche Rollen verfügen über eine Befestigungsachse, die über eine drehfest mit dem Traggestell verbunden wird, um eine Abstützung für die Bereitstellung des Antriebsmomentes zu erreichen. Die Drehfestigkeit wird über einen Formschluss bewirkt.

Die Rollen können andererseits passive Rollen sein. Solche passiven Rollen werden entweder über einen externen Motor angetrieben oder können sich frei drehen. Da hierbei keine Drehmomentabstützung erforderlich ist, werden diese lediglich kraftschlüssig am Traggestell verspannt.

Die GB 2 101 061 A und DE 195 32 390 A1 offenbaren jeweils einen Förderer mit einer Förderrolle. Die Förderrollrolle ist mit einer speziell gestalteten Schraube an einem Gestell befestigt. Insbesondere, offenbart GB 2 101 061 A einen Rollenförderer nach dem Oberbegriff des Anspruchs 1.

Die DE 27 36 131 A1 offenbart eine Schraube, die gegen Drehen gesichert ist, bei welcher zwischen dem Schraubenkopf und dem Schaft ein Konus angeordnet ist.

Der vorliegenden Erfindung liegt die Aufgabe zugrunde, eine einfache Möglichkeit zur Montage von Rollen an einem Traggestell bereitzustellen. Die Aufgabe wird gelöst durch einen Rollenförderer und ein Verfahren nach den Hauptansprüchen; Ausgestaltungen sind Gegenstand der Unteransprüche sowie der Beschreibung.

Die Erfindung ermöglich eine einfache Möglichkeit zur Montage eine Rollen an einem Traggestell. Dabei ist von besonderer Bedeutung, dass die Befestigungsschraube an einer Mehrkantbohrung befestigbar ist, die zugleich für anderen Arten der Befestigung geeignet ist. So kann die Mehrkantbohrung auch für eine formschlüssig drehfeste Verbindung mit einer insbesondere komplementär ausgebildeten Befestigungsachse verwendet werden. Insgesamt kann so ein Baukastenprinzip unterstützt und die Bauteilkomplexität reduziert werden.

In einer vorteilhaften Ausgestaltung wird die Erfindung zur Befestigung einer Poly-V-Rolle verwendet. Hierbei dient der Kreiskegelstumpfabschnitt gezielt zum Aufbau der Arbeitsspannung des Poly-V-Riemen. Dabei ist eine erleichtere Vormontage bei reduzierter Vorspannung möglich.

Die Erfindung wird anhand der Figuren nachfolgend näher erläutert; hierin zeigt:
- Figur 1: eine Befestigungsschraube unterschiedlichen Ansichten
- Figur 2: eine erfindungsgemäße Rollenförderer
- Figur 3: ausschnittsweise da Traggestell mit daran gehaltener Rolle;
- Figur 4: einen Querschnitt durch die Rolle und das Traggestell an der Befestigungsschraube;
- Figur 5: den Kreiskegelstumpfabschnitt der Befestigungsschraube in isolierter schematischer Darstellung;
- Figur 6: die Befestigungsöffnung am Traggestell in isolierter schematischer Darstellung,
- Figur 7: eine Förderrolle mit einer Befestigungsachse, die einen Sechskant-Außenumfang aufweist.

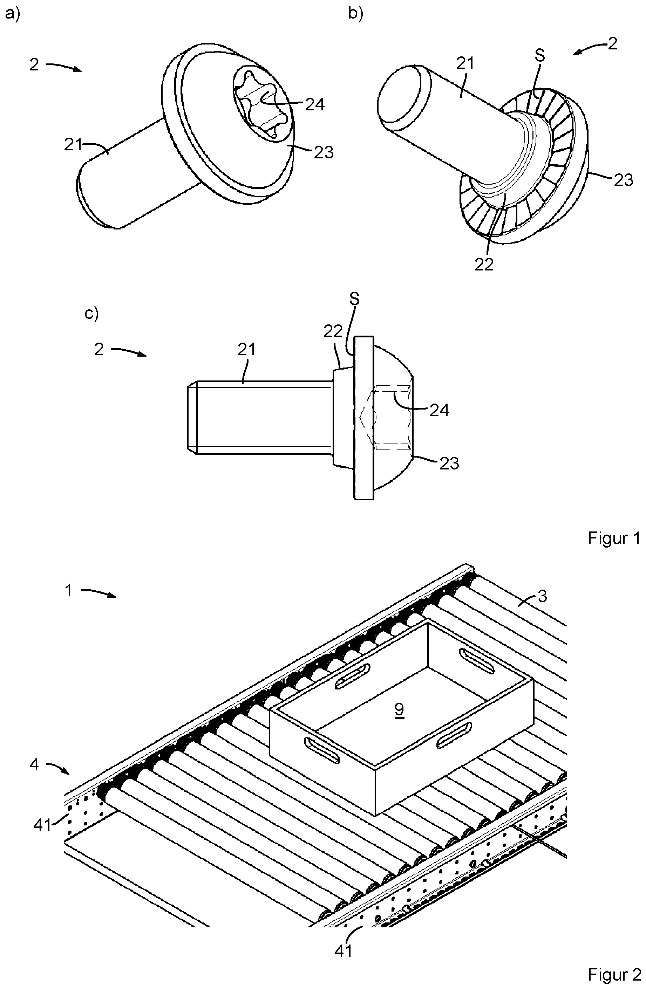

Die Befestigungsschraube 2 nach Figur 1 hat einen Gewindeschaft 21 mit einem Außengewinde und einen Schraubenkopf 23. Axial zwischen dem Schraubenkopf 23 und dem Gewindeschaft 21 ist ein Kreiskegelstumpfabschnitt 22 angeordnet.

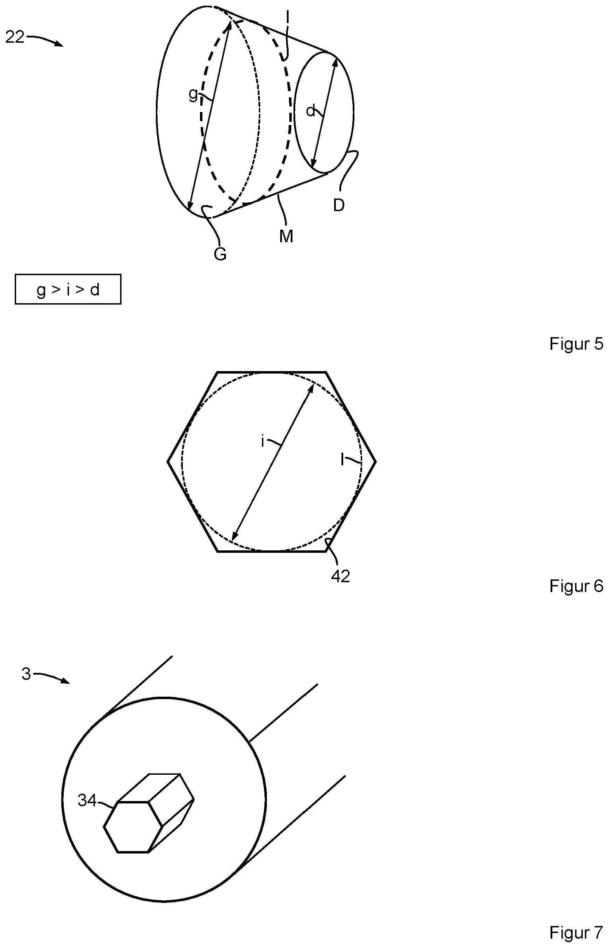

Die Struktur des Kreiskegelstumpfabschnitts 23 ist schematisch in Figur 5 dargestellt. Der Kreiskegelstumpfabschnitt 23 weist einen Grundbereich G mit einem Grunddurchmesser g sowie einen Deckbereich D mit einem Deckdurchmesser d auf. Der Deckdurchmesser d ist geringer ist als der Grunddurchmesser g.

Der Grundbereich G ist dem Schraubenkopf 23 zugewandt und der Deckbereich D ist dem Gewindeschaft 21 zugewandt. Dabei schließen sich der Kreiskegelstumpfabschnitt 22 und der Schraubenkopf 23 unmittelbar aneinander an. Der Grundbereich schließt sich unmittelbar an eine radialer Spannfläche S des Schraubenkopfs 23 an.

Der Kreiskegelstumpfabschnitt 22 kann separat durch eine konische Hülse gebildet sein, die auf den Gewindeschaft 21 aufgesteckt oder aufgeschraubt ist. Die Schraube kann insofern mehrteilig ausgebildet sein.

Die radiale Spannfläche S muss dabei keine glatte Fläche sein sondern kann eine reibungserhöhende Oberfläche aufweisen, wie in Figur 1b gezeigt.

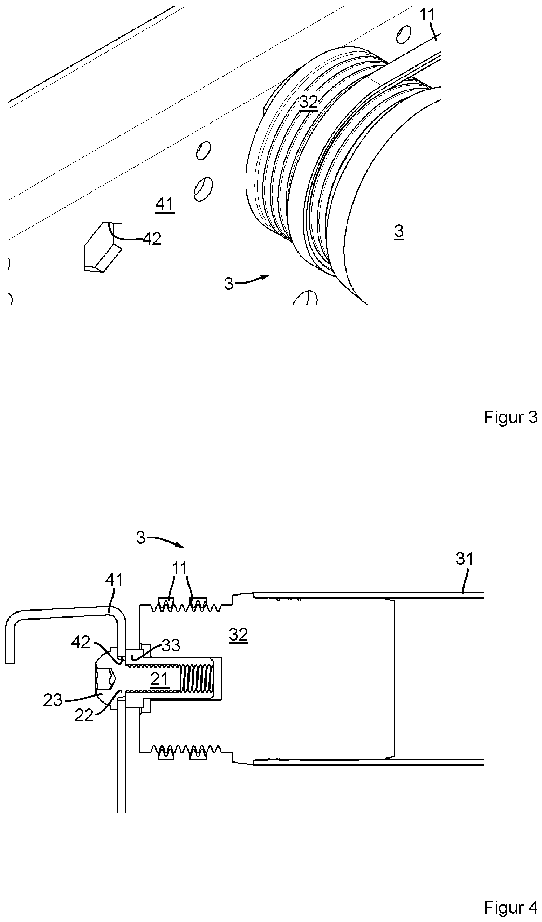

In einer Ausgestaltung wird die Befestigungsschraube 2 in einem Rollenförderer nach Figur 2 verwendet. Der Rollenförderer weist eine Mehrzahl an Förderrollen 3 auf, die an einem Tragestell 4 befestigt sind. Zumindest eine der Förderrollen 3 ist anhand einer Befestigungsschraube 2 der vorgenannten Art an dem Traggestell 4 befestigt. Das Traggestell 4 kann dazu ein Tragblech 41 aufweisen, an dem die Befestigung erfolgt (Figuren 3, 4).

Zur Befestigung ist eine Mehrkantbohrung 42 am Traggestell 4 vorgesehen. Mit dem Kreiskegelstumpfabschnitt 22 ist die Schraube in der Mehrkantbohrung 42 angeordnet. Die Befestigungsschraube 2 liegt mit dem Kreiskegelstumpfabschnitt an 22 einem Inkreis I der Mehrkantbohrung 42 an (Figur .4, 6).

Der Inkreisdurchmesser i der Mehrkantbohrung 42 ist dabei 42 geringer als der Grundkreisdurchmesser g des Kreiskegelstumpfabschnitts 22. Der Inkreisdurchmesser i ist größer ist als ein Deckkreisdurchmesser d des Kreiskegelstumpfabschnitts 22. Diese Bedingungen gelten insbesondere vor der Montage. Bei der Montage kann es zu Verformungen an der Schraube und/oder der Mehrkantbohrung kommen.

Der Kreiskegelstumpfabschnitt 22 wirkt mit der unrunden Mehrkantbohrung 42 zentrierend zusammen, so dass der Gewindeschaft 21 im verspannten Zustand koaxial zur Mehrkantbohrung 42 gehalten ist. Dies wirkt sich insbesondere vorteilhaft bei der Montage von sog. Poly-V-Rollen aus (z.B offenbart in DE 103 36 304 B4). Dabei ist am Rollenkopf ein Poly-V-Riemen 11 mit hoher Spannung angebracht. Zur Montage kann die Gewindebohrung zunächst exzentrisch zur Mehrkantbohrung 42 gehalten werden, was die Spannung am Poly-V-Riemen 11 verringert. Mit zunehmender Verdrehung der Befestigungsschraube 2 stellt sich der Zentrierungseffekt ein, was zugleich die Spannung am Poly-V-Riemen 11 signifikant erhöht. Vorteilhaft ist hierbei nun, dass bei der Vormontage der Poly-V-Riemen unter geringer Spannung gehalten ist, wenn die Förderrolle 3 am Traggestell 4 angebracht wird, was die Montage vereinfacht.

Die Mehrkantbohrung 42 kann eine Sechskantbohrung sein. Alternativ sind auch anderer Formen denkbar, solange damit eine drehfeste Verbindung herstellbar ist.

Zur Befestigung ist das Traggestell 4 abschnittsweise zwischen dem Schraubenkopf 23 und einem Befestigungsabschnitt 33 der Förderrolle 3 eingespannt. Der Gewindeschaft 21 ist in eine Gewindebohrung des Befestigungsabschnitts 33 eingeschraubt. Der Befestigungsabschnitt 33 ist über ein nicht dargestelltes Drehlager gegenüber einem Rollenkopf und/oder einem Rollenkörper gelagert (Figur 4).

Die Mehrkantbohrung eignet sich auch für eine andere Art der Befestigung einer Rolle. So zeigt Figur 7 eine Rolle, die eine Befestigungsachse 34 mit einer Außenumfang (hier einem Außensechskant) aufweist, der komplementär zur Mehrkantausnehmung 42 ausgebildet ist. Die Befestigungsachse 34 kann nun in die Mehrkantausnehmung 42 eingesteckt werden, wodurch ein drehfeste Verbindung zwischen der Befestigungsachse 34 und dem Traggestell 4 durch Formschluss erzeugt wird. Die Rolle nach Figur 7 ist insbesondere eine Motorrolle.

Bei der Montage kann folglich an dem Traggestell 4 mit der Mehrkantbohrung sowohl die kraftschlüssige Verbindung (Option 1) als auch die drehfest formschlüssige Verbindung (Option 2) zur Anwendung kommen. Ein Monteur kann daher je nach Art der Rolle vor Ort die Art der Montagemethode auswählen.

### Bezugszeichenliste

- 1: Rollenförderer
- 11: Poly-V-Riemen

- 2: Befestigungsschraube
- 21: Gewindeschaft
- 22: Kreiskegelstumpfabschnitt
- 23: Schraubenkopf
- 24: Werkzeugeingriffsmittel
- G: Grundbereich
- g: Grunddurchmesser
- D: Deckbereich
- d: Deckdurchmesser
- M: Mantelfläche
- S: Spannfläche

- 3: Förderrolle
- 31: Rollenkörper
- 32: Rollenkopf
- 33: Befestigungsabschnitt mit Gewindebohrung
- 34: Befestigungsachse mit Sechskantquerschnitt

- 4: Traggestell
- 41: Tragblech
- 42: Sechskantbohrung / Mehrkantbohrung
- I: Inkreis der Sechskantbohrung
- i: Inkreisdurchmesser

- 9: Fördergut

## Patentansprüche

1. Rollenförderer (1),
umfassend eine Mehrzahl an Förderrollen (3), die an einem Tragestell (4) gehalten sind,
wobei zumindest eine Förderrolle (3) anhand einer Befestigungsschraube (2) an dem Traggestell (4) befestigt ist;
die Befestigungsschraube (2) umfasst
einen Gewindeschaft (21) mit einem Außengewinde,
einen Schraubenkopf (23),
wobei axial zwischen dem Schraubenkopf (23) und dem Gewindeschaft (21) ein Kreiskegelstumpfabschnitt (22) vorgesehen ist;
wobei das Traggestell (4) abschnittsweise zwischen dem Schraubenkopf (23) und einem Befestigungsabschnitt (33) der Förderrolle (3) eingespannt ist,
**dadurch gekennzeichnet,**
**dass** das Traggestell (4) eine Mehrkantbohrung (42) aufweist und der Kreiskegelstumpfabschnitt (22) in der Mehrkantbohrung (42) angeordnet ist.

2. Rollenförderer (1) nach dem vorherigen Anspruch,
**dadurch gekennzeichnet,**
**dass** der Kreiskegelstumpfabschnitt (23) einen Grundbereich (G) mit einem Grunddurchmesser (g) sowie einen Deckbereich (D) mit einem Deckdurchmesser (d) aufweist, wobei der Deckdurchmesser (d) geringer ist als der Grunddurchmesser (g).

3. Rollenförderer (1) nach dem vorherigen Anspruch,
**dadurch gekennzeichnet,**
**dass** der Grundbereich (G) dem Schraubenkopf (23) zugewandt ist;
und **dass** der Deckbereich (D) dem Gewindeschaft (21) zugewandt ist.

4. Rollenförderer (1) nach einem der vorherigen Ansprüche,
**dadurch gekennzeichnet,**
**dass** der Kreiskegelstumpfabschnitt (22) und der Schraubenkopf (23) unmittelbar aneinander anschließen,
insbesondere dass sich der Grundbereich (G) unmittelbar an eine radiale Spannfläche (S) des Schraubenkopfs (23) anschließt.

5. Rollenförderer (1) nach einem der vorherigen Ansprüche,
**dadurch gekennzeichnet,**
**dass** der Kreiskegelstumpfabschnitt (22) derart in der Mehrkantbohrung (42) angeordnet ist, dass dadurch die Befestigungsschraube zentriert gegenüber der Mehrkantbohrung gehalten ist.

6. Rollenförderer nacheinem der vorherigen Ansprüche,
**dadurch gekennzeichnet,**
**dass** die Mehrkantbohrung (42) eine Sechskantbohrung ist.

7. Rollenförderer (1) nach einem der vorherigen Ansprüche,
**dadurch gekennzeichnet,**
**dass** der Befestigungsabschnitt (33) eine Gewindebohrung aufweist, die komplementär zum Gewindeschaft (21) ausgestaltet ist.

8. Rollenförderer (1) nach einem der vorherigen Ansprüche,
**dadurch gekennzeichnet,**
**dass** ein Inkreisdurchmesser (i) der Mehrkantbohrung (42) geringer ist als ein Grundkreisdurchmesser (g) des Kreiskegelstumpfabschnitts (22), insbesondere dass der Inkreisdurchmesser (i) größer ist als ein Deckkreisdurchmesser (d) des Kreiskegelstumpfabschnitts (22).

9. Rollenförderer nach einem der vorherigen Ansprüche,
**dadurch gekennzeichnet,**
**dass** die Förderrolle an einem Ende einen Rollenkopf (32) aufweist, an dem die Befestigungsschraube (2) angebracht ist, wobei an dem Rollenkopf ein Poly-V-Riemen (11) angebracht ist.

10. Verfahren zum Herstellen eines Rollenförderers (1) nach einem der vorherigen Ansprüche, umfassend die folgenden Verfahrensschritte:
Bereitstellen des Traggestells (4) mit einer Mehrkantbohrung (42),
Bereitstellen einer Förderrolle (3),
das Verfahren umfasst einen Auswahlschritt, wobei eine Auswahl aus den beiden nachfolgenden Optionen stattfindet:
- (Option 1) Einfügen der Befestigungsschraube (2) in die Mehrkantbohrung (42), wobei zur Befestigen der, insbesondere passiven, Rolle an dem Traggestell der Kreiskegelstumpfabschnitt (22) in der Mehrkantbohrung (42) angeordnet ist,
und
- (Option 2) Einfügen einer Befestigungsachse (34) der Rolle, insbesondere einer Motorrolle, in die Mehrkantbohrung (42), wobei die Befestigungsachse (34) einen Außenumfang aufweist, welcher durch Formschluss eine drehfeste Verbindung mit der Mehrkantbohrung (42) eingeht.

## Claims

1. A roller conveyor (1),
comprising a plurality of conveyor rollers (3), which are held on a support frame (4), wherein at least one conveyor roller (3) is fastened to the support frame (4) with a fastening screw (2);
the fastening screw (2) comprises
a threaded shank (21) with a male thread,
a screw head (23),
wherein a truncated cone section (22) is provided axially between the screw head (23) and the threaded shank (21);
wherein the support frame (4) sectionally clamped between the screw head (23) and a fastening section (33) of the conveyor roller (3),
**characterized in that**
the support frame (4) has a polygonal bore (42), and the truncated cone section (22) is arranged in the polygonal bore (42).

2. The roller conveyor (1) according to the preceding claim,
**characterized in that**
the truncated cone section (23) has a base area (G) with a base diameter (g) as well as a cover area (D) with a cover diameter (d), wherein the cover diameter (d) is less than the base diameter (g).

3. The roller conveyor (1) according to the preceding claim,
**characterized in that**
the base area (G) faces the screw head (23), and that the cover area (D) faces the threaded shank (21).

4. The roller conveyor (1) according to one of the preceding claims,
**characterized in that**
the truncated cone section (22) and the screw head (23) directly adjoin each other, in particular that the base area (G) directly adjoins a radial clamping surface (S) of the screw head (23).

5. The roller conveyor (1) according to one of the preceding claims,
**characterized in that**
the truncated cone section (22) is arranged in the polygonal bore (42) in such a way that the fastening screw is held centered relative to the polygonal bore as a result.

6. The roller conveyor (1) according to one of the preceding claims,
**characterized in that**
the polygonal bore (42) is a hexagonal bore.

7. The roller conveyor (1) according to one of the preceding claims,
**characterized in that**
the fastening section (33) has a threaded hole designed complementary to the threaded shank (21).

8. The roller conveyor (1) according to one of the preceding claims,
**characterized in that**
an inscribed circle diameter (i) of the polygonal bore (42) is smaller than a base circle diameter (g) of the truncated cone section (22), in particular that the inscribed circle diameter (i) is larger than a cover circle diameter (d) of the truncated cone section (22).

9. The roller conveyor (1) according to one of the preceding claims,
**characterized in that**
the conveyor roller has a roller head (32) at one end, to which the fastening screw (2) is secured, wherein a poly V-belt (11) is secured to the roller head.

10. A method for manufacturing a roller conveyor (1) according to one of the preceding claims, comprising the following procedural steps:
Providing the support frame (4) with a polygonal bore (42),
Providing a conveyor roller (3),
the method comprises a selection step, wherein a selection between the following options takes place:
- (Option 1) Inserting the fastening screw (2) into the polygonal bore (42), wherein the truncated cone section (22) is arranged in the polygonal bore (42) to fasten the in particular passive roller to the support frame, and
- (Option 2) Inserting a fastening axis (34) of the roller, in particular of a motorized roller, into the polygonal bore (42), wherein the fastening axis (34) has an outer circumference that forms a torsionally rigid connection with the polygonal bore (42) through positive locking.

## Revendications

1. Convoyeur à rouleaux (1),
comprenant une pluralité de rouleaux de transport (3), qui sont maintenus sur un châssis de support (4),
sachant qu'au moins un rouleau de transport (3) est fixé sur le châssis de support (4) à l'aide d'une vis de fixation (2),
la vis de fixation (2) comprend
une tige filetée (21) avec un filetage extérieur,
une tête de vis (23),
sachant qu'une section tronconique circulaire (22) est prévue axialement entre la tête de vis (23) et la tige filetée (21),
sachant que le châssis de support (4) est serré par section entre la tête de vis (23) et une section de fixation (33) du rouleau de transport (3),
**caractérisé en ce que ,**
le châssis de support (4) comporte un alésage polygonal (42) et la section tronconique circulaire (22) est disposée dans l'alésage polygonal (42).

2. Convoyeur à rouleaux (1) selon la revendication précédente,
**caractérisé en ce que,**
la section tronconique circulaire (23) comporte une zone de base (G) avec un diamètre de base (g) ainsi qu'une zone de couverture (D) avec un diamètre de couverture (d), sachant que le diamètre de couverture (d) est plus faible que le diamètre de base (g).

3. Convoyeur à rouleaux (1) selon la revendication précédente,
**caractérisé en ce que,**
la zone de base (G) est tournée vers la tête de vis (23),
et **en ce que** la zone de couverture (D) est tournée vers la tige filetée (21).

4. Convoyeur à rouleaux (1) selon l'une quelconque des revendications précédentes,
**caractérisé en ce que,**
la section tronconique circulaire (22) et la tête de vis (23) se raccordent directement l'une à l'autre,
en particulier, **en ce que** la zone de base (G) se raccorde directement à une surface de serrage radiale (S) de la tête de vis (23).

5. Convoyeur à rouleaux (1) selon l'une quelconque des revendications précédentes,
**caractérisé en ce que,**
la section tronconique circulaire (22) est disposée dans l'alésage polygonal (42) de telle manière que la vis de fixation est maintenue de ce fait centrée par rapport à l'alésage polygonal.

6. Convoyeur à rouleaux selon l'une quelconque des revendications précédentes,
**caractérisé en ce que,**
l'alésage polygonal (42) est un alésage hexagonal.

7. Convoyeur à rouleaux (1) selon l'une quelconque des revendications précédentes,
**caractérisé en ce que,**
la section de fixation (33) comporte un alésage fileté, qui est configuré de façon complémentaire à la tige filetée (21).

8. Convoyeur à rouleaux (1) selon l'une quelconque des revendications précédentes,
**caractérisé en ce qu',**
un diamètre de cercle inscrit (i) de l'alésage polygonal (42) est plus faible qu'un diamètre de cercle de base (g) de la section tronconique circulaire (22),
en particulier **en ce que** le diamètre de cercle inscrit (i) est plus grand qu'un diamètre de cercle de couverture (d) de la section tronconique circulaire (22).

9. Convoyeur à rouleaux selon l'une quelconque des revendications précédentes,
**caractérisé en ce que ,**
le rouleau de transport comporte une tête de rouleau (32) à une extrémité, sur laquelle est placée la vis de fixation (2), sachant qu'une courroie trapézoïdale Poly-V (11) est placée sur la tête de rouleau.

10. Procédé de fabrication d'un convoyeur à rouleaux (1) selon l'une quelconque des revendications précédentes, comprenant les étapes de procédé suivantes :
fourniture du châssis de support (4) avec un alésage polygonal(42),
fourniture d'un rouleau de transport (3),
le procédé comprenant une étape de choix, sachant qu'un choix a lieu entre les deux options suivantes:
- (Option 1) Insertion de la vis de fixation (2) dans l'alésage polygonal (42), sachant que pour fixer le rouleau, en particulier le rouleau passif, sur le châssis de support, la section tronconique circulaire (22) est disposée dans l'alésage polygonal (42), et
- (Option 2) Insertion d'un axe de fixation (34) du rouleau, en particulier d'un rouleau motorisé, dans l'alésage polygonal (42), sachant que l'axe de fixation (34) comporte une prériphérie extérieure, laquelle vient en liaison solidaire en rotation avec l'alésage polygonal (42) par conformité de forme.
